# EUROPÄISCHE PATENTSCHRIFT

(11) **EP 2 250 686 B1**
(45) Veröffentlichungstag und Bekanntmachung des Hinweises auf die Patenterteilung: **29.08.2012**
(21) Anmeldenummer: 09717289.4
(22) Anmeldetag: 26.02.2009
(51) Int. Cl.: H01M 2/12

(54) **ENTGASUNGSSYSTEM FÜR EINEN AKKUMULATOR UND AKKUMULATOR MIT EINEM ENTGASUNGSSYSTEM**
DEGASSING SYSTEM FOR AN ACCUMULATOR, AND ACCUMULATOR COMPRISING A DEGASSING SYSTEM
SYSTÈME DE DÉGAZAGE DESTINÉ À UN ACCUMULATEUR ET ACCUMULATEUR DOTÉ D'UN TEL SYSTÈME DE DÉGAZAGE

(30) Priorität: 07.03.2008 DE 102008013186
(43) Veröffentlichungstag der Anmeldung: 17.11.2010
(73) Patentinhaber: Johnson Controls Hybrid and Recycling GmbH, 30419 Hannover (DE)
(72) Erfinder: WIEGMANN, Martin, 27246 Borstel (DE); JOSWIG, Ralf, 29690 Buchholz (Aller) (DE)
(74) Vertreter: Günther, Constantin
(86) Internationale Anmeldenummer: PCT/EP2009/001372
(87) Internationale Veröffentlichungsnummer: WO 2009/109324

(56) Entgegenhaltungen:
- EP-A1- 0 627 779
- EP-A2- 1 233 463
- DE-U1- 9 104 291
- JP-A- 9 181 460
- SU-A1- 393 785

## Beschreibung

Die Erfindung betrifft ein Entgasungssystem für einen Akkumulator, insbesondere für Hybrid-Akkumulatoren, Nickel-Metallhydrid-Akkumulatoren und Lithium-Ionen-Akkumulatoren.

Die Erfindung betrifft ferner einen Akkumulator mit einem Entgasungssystem.

Leistungsstarke Akkumulatoren mit hohen Energiedichten in den galvanischen Zellen werden insbesondere in Hybridfahrzeugen und in Elektrofahrzeugen verwendet.

Die hohen Energiedichten führen zu einer hohen Wärmeentwicklung. Um die Leistungsfähigkeit der Akkumulatoren zu erhalten und in einem weiten Betriebsfenster gewährleisten zu können, ist eine effektive Kühlung der Akkumulatoren notwendig. Zudem ist es erforderlich, dass die Akkumulatoren ein Sicherheitssystem aufweisen, das bei einer Überhitzung der Akkumulatoren eingreift, um insbesondere eine Explosion der Zellen zu verhindern.

Neben einer effektiven Kühlung und einem Sicherheitssystem zum Schutz vor einer Überhitzung erfordern leistungsstarke Akkumulatoren ein Sicherheitssystem zum Schutz des Akkumulators vor einem Gasüberdruck in dem Akkumulator. Der Gasüberdruck kann zu plötzlichen Reaktionen und zu einem Entzünden des Akkumulators führen. Dadurch können Menschen und die Umwelt geschädigt werden.

Darüber hinaus ist das Innere der Akkumulatoren vor Staub und vor Spritzwasser zu schützen, das beispielsweise durch Hochdruckreiniger oder Dampfstrahler hervorgerufen wird.

Aus der SU393785 ist ein Belüftungsschlauch für eine Alkali-Batterie bekannt, bestehend aus einem Hals und einem Klappdeckel mit einem Ventil, die um eine erste Achse klappbar sind. Vorgesehen ist ferner eine auf den Klappdeckel einwirkende Torsionsfeder, die an einer zweiten Achse befestigt ist.

Aus der JP09181460 A geht eine Batteriekammer hervor, die eine Batterie aufnimmt. Die Batteriekammer befindet sich in einem Kabinett, das eine Mehrzahl von Öffnungen in einer Seitenwand der Kammer aufweist, die als Gasauslassöffnung dienen.

Aus der DE 9104291 U1 geht ein Verschlussstopfen für Akkumulatorzellen mit einem Gehäuse aus Kunststoff hervor, das in die Elektrolyteinfiihröffnung eingeschraubt oder eingerenkt ist und welches zur Entgasung der Zelle einen mikroporösen Körper besitzt. Im Gasweg vor dem mikroporösen Körper ist ein Druckentlastungsventil angeordnet.

Aufgabe der vorliegenden Erfindung ist es daher, ein Entgasungssystem für einen Akkumulator bereitzustellen, das einen wirksamen Schutz vor einem Gasüberdruck und vor äußeren Verunreinigungen bietet. Ferner ist es Aufgabe der vorliegenden Erfindung, ein Akkumulatorgehäuse und einen Akkumulator bereitzustellen, die wirksam vor einem Gasüberdruck und vor äußeren Verunreinigungen geschützt sind.

Die Aufgabe wird erfindungsgemäß durch ein Entgasungssystem mit den Merkmalen von Anspruch 1, mit einem Akkumulatorgehäuse mit den Merkmalen von Anspruch 5 sowie mit einem Akkumulator mit den Merkmalen von Anspruch 7 gelöst.

Das erfindungsgemäße Entgasungssystem ermöglicht einen schnellen Druckausgleich zwischen dem Akkumulatorinneren und der Akkumulatorumgebung, wenn eine Zelle innerhalb des Akkumulatorgehäuses in Folge einer Überladung, eines Kurzschlusses oder aus einer anderen Ursache eine große Menge Gas freisetzt. Die große freigesetzte Menge Gas sammelt sich in dem Akkumulatorgehäuse an und erzeugt einen Überdruckt des Gasinnendrucks gegenüber dem Umgebungsdruck (kurz Gasüberdruck genannt). Die wenigstens eine drehbar um den Stift gelagerte Klappe öffnet bei einem bestimmten Gasüberdruck und lässt Gas aus dem.Akkumulatorgehäuse entweichen.

Vorzugsweise öffnet die Klappe in Abhängigkeit von dem Gasüberdruck. Beispielsweise kann vorgesehen sein, dass die Klappe bereits bei einem sehr geringen Gasüberdruck leicht öffnet und bei einem vordefinierten Gasüberdruck vollständig geöffnet ist, beispielsweise bei einem Gasüberdruck von einem halben Bar oder einem Bar.

Ein weiterer Vorteil des erfindungsgemäßen Entgasungssystems besteht darin, dass Kondenswasser, das sich auf dem Boden des Akkumulatorgehäuses ansammelt, zwischen der Dichtung und der wenigstens einen Klappe ablaufen kann.

Zudem ist das Akkumulatorinnere durch das erfindungsgemäße Entgasungssystem sicher vor äußeren Einwirkungen (beispielsweise Spritzwasser oder Staub) geschützt. Dieser Schutz wird dadurch erzielt, dass die wenigstens eine Klappe derart angeordnet ist, dass die Klappe durch das Spritzwasser oder dergleichen gegen die Dichtung gedrückt und so die Gasauslassöffnung wirksam verschlossen wird.

Der Schutz des Akkumulatorinneren und der wenigstens einen Klappe vor äußeren Einflüssen lassen sich verbessern, wenn unterhalb der wenigstens einen Klappe ein Prallblech angeordnet ist. Das Prallblech ist so angeordnet, dass es die wenigstens eine Klappe möglichst gut gegen ein direktes Einwirken durch äußere Einflüsse geschützt wird.

Vorzugsweise ist das Prallblech in einer senkrechten Ebene zu einer Längsachse des Entgasungssystems wenigstens genauso groß dimensioniert wie die wenigstens eine Klappe und in axialer Richtung unterhalb der wenigstens einen Klappe angeordnet.

In einer besonderen Ausführungsform sind genau zwei symmetrisch um den Stift angeordnete Klappen vorgesehen. Der Stift liegt dann zwischen den beiden Klappen. Die beiden Klappen und die Feder (es kann auch für jede Klappe eine Feder vorgesehen sein), sind so zueinander angeordnet, dass auf die beiden Klappen ein entgegengesetztes Drehmoment ausgeübt wird. Auf diese Weise wird sichergestellt, dass sie im Einbauzustand gegen ein durch die Feder bzw. den Federn erzeugtes Drehmoment nach unten öffnen und nach oben gegen die Dichtung gedrückt werden.

Erfindungsgemäß ist vorgesehen, dass das Entgasungssystem einen im Wesentlichen kreisförmigen Querschnitt aufweist. Insbesondere weist eine in diesem Fall ringförmige Dichtung Vorteile in den Dichteigenschaften gegenüber Dichtungen mit Winkeln auf. Es ist jedoch nicht ausgeschlossen, dass auch andere Querschnittsflächen, beispielsweise rechteckig oder quadratisch, verwendet werden.

Erfindungsgemäß ist auch ein Akkumulatorgehäuse mit einem erfindungsgemäßen Entgasungssystem vorgesehen. Vorzugsweise ist das Entgasungssystem am Gehäuseboden des Akkumulatorgehäuses angebracht. Je nach Bedarf und insbesondere nach Größe des Akkumulatorgehäuses können auch mehrere Entgasungssysteme vorgesehen sein.

Das erfindungsgemäße Akkumulatorgehäuse ist besonders für Akkumulatoren geeignet, die als Hybrid-Akkumulatoren, Nickel-Metallhydrid-Akkumulatoren oder Lithium-Ionen-Akkumulatoren ausgebildet sind, bei denen hohe Energiedichten auftreten können.

Erfindungsgemäß ist ferner ein Akkumulator mit einem erfindungsgemäßen Akkumulatorgehäuse vorgesehen. Vorzugsweise umfasst der erfindungsgemäße Akkumulator eine Vielzahl von Zellen, die in dem Akkumulatorgehäuse untergebracht sind. Selbstverständlich weist der Akkumulator alle für einen bestimmungsgemäßen Gebrauch erforderlichen Bestandteile auf, wie z.B. einen positiven und einen negativen Pol.

Die Erfindung wird anhand eines in den nachfolgenden Figuren dargestellten Ausführungsbeispiels näher erläutert.

Es zeigen:
- Figur 1: -eine Explosionsansicht eines erfindungsgemäßen Entgasungssystems,
- Figur 2: eine Seitenansicht des erfindungsgemäßen Entgasungssystems im zusammengebauten Zustand,
- Figur 3: eine Perspektivansicht auf das erfindungsgemäße Entgasungssystem von unten,
- Figur 4: eine weitere Perspektivansicht auf das erfindungsgemäße Entgasungssystem von oben,
- Figur 5: eine Schnittansicht des erfindungsgemäßen Entgasungssystems in Richtung V aus Figur 2 bei geschlossener Entgasungsöffnung und
- Figur 6: eine Schnittansicht in Richtung V aus Figur 2 bei geöffneter Entgasungsöffnung.

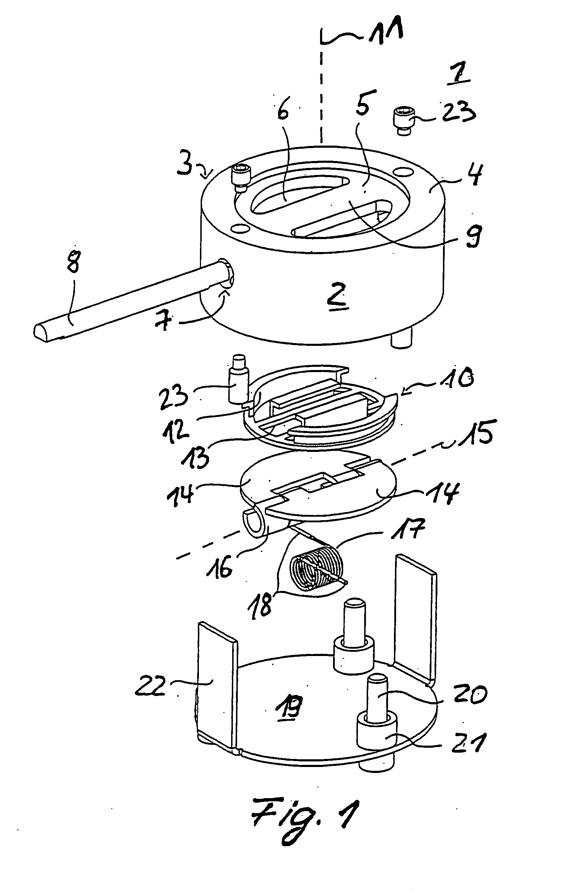

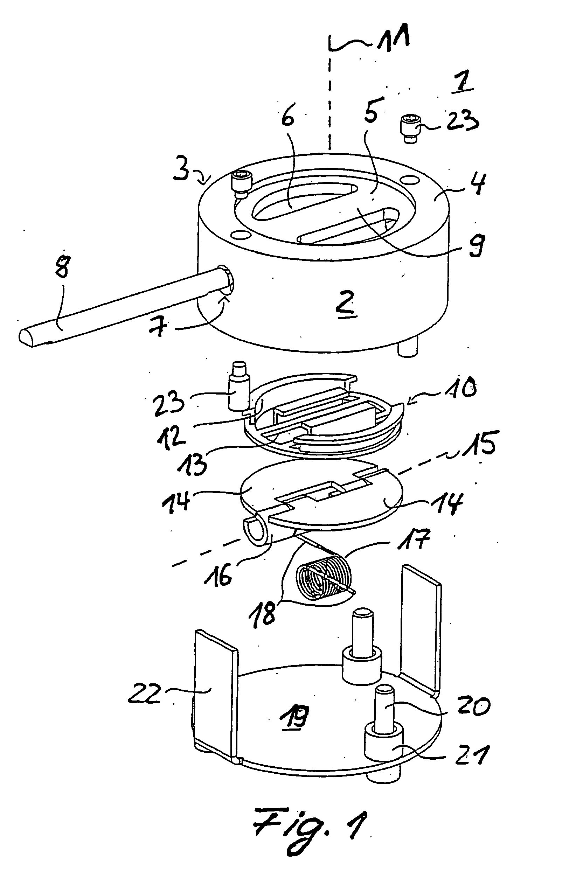

Figur 1 zeigt ein erfindungsgemäßes Entgasungssystem 1.

Das Entgasungssystem 1 umfasst einen Korso 2. Unter einem Korso wird ein Grundkörper verstanden, in dem sich vorzugsweise auch Bohrungen zum Befestigen anderer Komponenten befinden. Der Korso 2 hat eine zylinderförmige Gestalt mit kreisförmiger Querschnittsfläche. Die Oberseite 3 des Korsos 2 hat einen kreisförmigen Rand 4 und ist zentral kreisförmig abgesenkt. Die kreisförmige Absenkung 5 weist eine Entgasungsöffnung 6 auf.

Die Entgasungsöffnung 6 besteht aus zwei Öffnungen in Form von Kreisabschnitten (jeweils gebildet aus einem Kreisbogen und einer Sekante), die symmetrisch zu einer Diagonalen der Absenkung 5 angeordnet sind.

Der Korso 2 weist an seinem Mantel zwei diagonal gegenüberliegende Bohrungen 7 auf, von denen jedoch nur eine zu erkennen ist. In den Bohrungen 7 ist ein Stift 8 gelagert. Der Stift 8 hat zweckmäßig eine Kreiszylinderform.

Im zusammengebauten Zustand ist der Stift 8 in dem Korso 2 derart gelagert, dass er unterhalb eines Stegs 9 angeordnet ist, der zwischen den beiden kreisabschnittförmigen Bestandteilen der Entgasungsöffnung 6 liegt.

Das Entgasungssystem umfasst weiter eine Dichtung 10. Die Dichtung 10 weist in Bezug auf eine Längsachse 11 vertikal orientierte Befestigungsabschnitte 12 auf. Die Befestigungsabschnitte 12 haben L-förmige Querschnitte (senkrecht zur Längsachse 11). Die Befestigungsabschnitte 12 sind so geformt, dass sie durch die Entgasungsöffnungen 6 hindurch gesteckt werden können und aufgrund der L-förmigen Querschnittsflächen auf der Absenkung 5 aufliegen. Auf diese Weise hat die Dichtung 10 in vertikaler Richtung (also in Richtung der Längsachse 11) einen festen Sitz.

Die Dichtung 10 weist Öffnungen 13 auf, die mit der Entgasungsöffnung 6 so korrespondieren, dass ein Gasfluss vom Inneren eines Akkumulators nach außen nicht behindert wird. Vorzugsweise haben die Öffnungen 13 etwa die gleiche Form und Dimension wie die Entgasungsöffnungen 6.

Unterhalb der Dichtung 10 sind zwei Klappen 14 angeordnet. Die Klappen 14 haben im Wesentlichen halbkreisförmige Querschnittsflächen. Die Klappen 14 sind entlang einer Diagonalen miteinander so verbunden, dass sie relativ zueinander um die Diagonale 15 schwenkbar sind.

Entlang der Diagonalen 15 sind die Klappen abschnittsweise wie Hohlzylinder geformt, so dass der Stift 8 entlang der Diagonalen 15 durch diese Hohlzylinder geführt werden kann. Die Hohlzylinder selbst müssen an ihren Mantelflächen nicht vollständig geschlossen sein. Entscheidend ist, dass der Stift 8 soweit umfasst ist, dass die Klappen 14 sicher um den Stift 8 schwenkbar sind.

Unterhalb der Klappen 14 ist eine Feder 17 zu erkennen.

Die Feder 17 besteht aus einem spiralförmig aufgewickelten geeigneten Metalldraht. Die Enden 18 sind verlängert.

Im zusammengebauten Zustand liegen die Enden 18 an den Klappen 14 von unten an. Die Feder 17 ist derart gewickelt, dass sie die Klappen 14 in Bezug auf die Längsachse 11 nach oben gegen die Dichtung 10 drücken. Damit wird auf die beiden Klappen 14 ein gleich großes aber entgegengesetztes Drehmoment aufgeübt.

Steigt der Innendruck im Akkumulatorgehäuse derart an, dass ein Gasüberdruck entsteht, so werden die Klappen 14 gegen die Federkraft 8 nach unten gedrückt, so dass Gas aus dem Akkumulatorgehäuse durch die Entgasungsöffnung 6 entweichen kann.

Zum Schutz des Akkumulatorinneren und des Entgasungssystems 1 ist schließlich ein Prallblech 19 vorgesehen, das unterhalb der Klappen 14 angeordnet ist. Das Prallblech 19 wird mit einem vordefinierten Abstand von der Unterseite des Korsos 2 befestigt. Vorliegend wird das Prallblech mit Schrauben 20 befestigt, die durch das Prallblech 19 geführt und in dem Korso 2 hineingeschraubt werden. Der vordefinierte Abstand wird durch Abstandshalter 21 gewährleistet.

Das Prallblech 19 weist zwei senkrecht nach oben weisende Flügel 22 auf.

Die Flügel 22 liegen im zusammengebauten Zustand außen an dem Korso 2 derart an, dass sie die Bohrungen 7 abdecken. Dadurch werden die Bohrungen 7 vor dem Eindringen von äußeren Einflüssen geschützt.

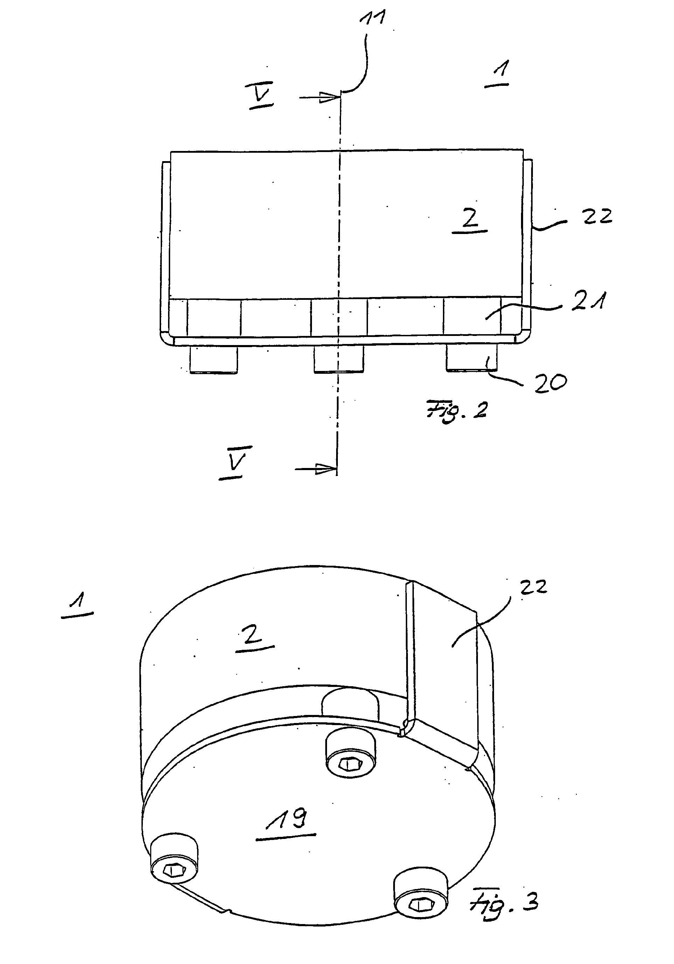

Figur 2 zeigt das Entgasungssystem 1 aus Figur 1 in Seitenansicht und im zusammengebauten Zustand.

In Figur 3 ist das Entgasungssystem 1 in Perspektivansicht von unten (von außen betrachtet) gezeigt.

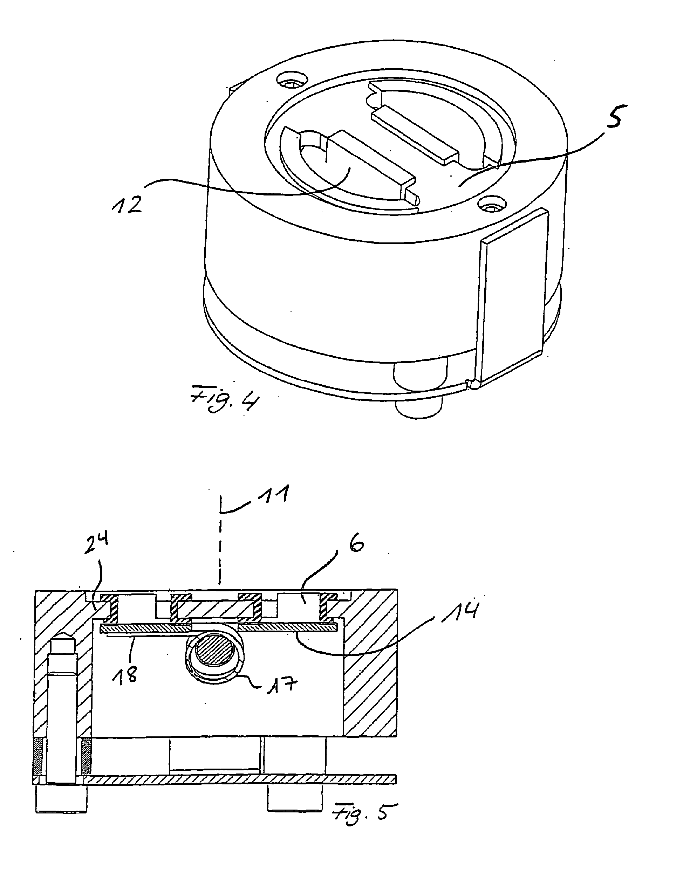

In Figur 4 ist gut zu erkennen, wie die L-förmigen Befestigungsabschnitte 12 oben auf die Ausnehmung 5 greifen und einen festen Sitz der Dichtung 10 gewährleisten.

Figur 5 zeigt eine Querschnittsansicht des zusammengebauten Entgasungssystem 1 in Richtung V aus Figur 2.

Es ist gut zu erkennen, dass die Klappen 14 von der Feder 17 bzw. den Enden 18 der Feder 17 nach oben gedrückt werden, so dass sie im Wesentlichen horizontal ausgerichtet sind, also senkrecht zu der Längsachse 11. Die Bewegung der Klappen 14 nach oben wird durch waagerecht verlaufende Vorsprünge 24 begrenzt. Es müssen nicht mehrere Vorsprünge 24 sein, es ist auch möglich, dass der Vorsprung 24 im Kreis um die Längsachse 11 herumläuft.

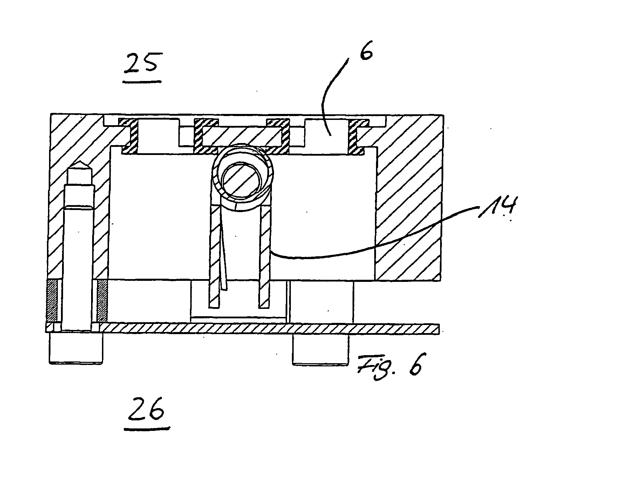

Figur 6 zeigt die Ansicht aus Figur 5 mit freigegebenen Entgasungsöffnungen 6. Dies ist daran zu erkennen, dass die Klappen 14 im Wesentlichen senkrecht nach unten geklappt sind. Dies ist möglich, weil auf der Akkumulatorinnenseite 25 ein höherer Gasdruck vorhanden ist als in der Akkumulatorumgebung 26.

Der Gasüberdruck ist ausreichend groß, um die Klappen 14 gegen die Federkraft vollständig nach unten zu klappen. In dieser Stellung ist ein sehr schneller Druckausgleich möglich. Im vorliegenden Beispiel beträgt der Gasüberdruck für diesen Zustand etwa einen bar.

Mit Hilfe von Justierschrauben 23 lässt sich der Stitt 8 ausrichten. Hierzu sind die Justierschrauben 24 paraxial und über- bzw. unterhalb des Stiftes 8 geführt.

### Bezugszeichenliste

- 1: Entgasungssystem
- 2: Korso
- 3: Oberseite
- 4: Rand
- 5: Absenkung
- 6: Entgasungsöffnung
- 7: Bohrung
- 8: Stift
- 9: Steg
- 10: Dichtung
- 11: Längsachse
- 12: Befestigungsabschnitt
- 13: Öffnung
- 14: Klappe
- 15: Diagonale
- 16: Hohlzylinder
- 17: Feder
- 18: Ende
- 19: Prallblech
- 20: Schraube
- 21: Abstandshalter
- 22: Flügel
- 23: Justierschraube
- 24: Vorsprung
- 25: Akkumulatorinnenseite
- 26: Akkumulatorumgebung

## Patentansprüche

1. Entgasungssystem für einen Akkumulator, wobei das Entgasungssystem (1) aufweist:
a) einen Korso (2) mit einer Entgasungsöffnung (6),
b) einen in dem Korso (2) angeordneten Stift (8),
c) wenigstens eine drehbar um den Stift (8) gelagerte Klappe (14),
d) eine Feder (17), die angeordnet ist, ein Drehmoment auf die wenigstens eine Klappe (14) auszuüben,
e) eine Dichtung (10), die derart angeordnet, dass die wenigstens eine Klappe (14) in einer Ruhestellung an der Dichtung (10) anliegt und die Entgasungsöffnung verschließt.

2. Entgasungssystem nach Anspruch 1, **gekennzeichnet durch** ein Prallblech (19), das unterhalb der wenigstens einen Klappe (14) angeordnet ist.

3. Entgasungssystem nach Anspruch 1 oder 2, **dadurch gekennzeichnet, dass** zwei symmetrisch um den Stift (8) angeordnete Klappen (14) vorgesehen sind.

4. Entgasungssystem nach einem der vorstehenden Ansprüche, **dadurch gekennzeichnet, dass** das Entgasungssystem (1) einen im Wesentlichen kreisförmigen Querschnitt aufweist.

5. Akkumulatorgehäuse mit einem Entgasungssystem (1) nach einem der vorstehenden Ansprüche.

6. Akkumulatorgehäuse nach Anspruch 5, **dadurch gekennzeichnet, dass** das Entgasungssystem (1) am Gehäuseboden des Akkumulatorgehäuses angebracht ist.

7. Akkumulator mit einem Akkumulatorgehäuse nach Anspruch 5 oder 6.

8. Akkumulator nach Anspruch 7, **gekennzeichnet durch** eine Vielzahl von galvanischen Zellen, die in dem Akkumulatorgehäuse angeordnet sind.

9. Akkumulator nach Anspruch 8, **dadurch gekennzeichnet, dass** die galvanischen Zellen Lithium-Ionen-Zellen oder Nickel-Metallhydrid-Zellen sind.

## Claims

1. Degassing system for an accumulator, wherein the degassing system (1) has:
a) a corso (2) with a degassing opening (6),
b) a pin (3) which is arranged in the corso (2),
c) at least one flap (14) which is mounted such that it can rotate around the pin (8),
d) a spring (17) which is arranged to exert a torque on the at least one flap (14),
e) a seal (10) which is arranged such that the at least one flap (14) rests on the seal (10) in a rest position, and closes the Degassing opening.

2. Degassing system according to Claim 1, **characterized by** a baffle plate (19) which is arranged under the at least one flap (14).

3. Degassing system according to Claim 1 or 2, **characterized in that** two flaps (14) are provided and are arranged symmetrically around the pin (8).

4. Degassing system according to one of the preceding claims, **characterized in that** the degassing system (1) has an essentially circular cross section.

5. Accumulator housing having a degassing system (1) according to one of the preceding claims.

6. Accumulator housing according to Claim 5, **characterized in that** the degassing system (1) is fitted to the housing base of the accumulator housing.

7. Accumulator having an accumulator housing according to Claim 5 or 6.

8. Accumulator according to Claim 7, **characterized by** a multiplicity of electrochemical cells which are arranged in the accumulator housing.

9. Accumulator according to Claim 8, **characterized in that** the electrochemical cells are lithium-ion cells or nickel-metal-hydride cells.

## Revendications

1. Système de dégazage pour un accumulateur, le système de dégazage (1) présentant :
a) un corso (2) avec une ouverture de dégazage (6),
b) une goupille (8) disposée dans le corso (2),
c) au moins un clapet (14) monté de manière à pouvoir tourner autour de la goupille (8),
d) un ressort (17) qui est disposé de manière à exercer un couple sur l'au moins un clapet (14),
e) un joint d'étanchéité (10) qui est disposé de telle sorte que l'au moins un clapet (14) s'applique dans la position de repos contre le joint d'étanchéité (10) et ferme l'ouverture de dégazage.

2. Système de dégazage selon la revendication 1, **caractérisé par** une tôle d'impact (19) qui est disposée sous l'au moins un clapet (14).

3. Système de dégazage selon la revendication 1 ou 2, **caractérisé en ce que** deux clapets (14) disposés symétriquement autour de la goupille (8) sont prévus.

4. Système de dégazage selon l'une quelconque des revendications précédentes, **caractérisé en ce que** le système de dégazage (1) présente une section transversale essentiellement circulaire.

5. Boîtier d'accumulateur comprenant un système de dégazage (1) selon l'une quelconque des revendications précédentes.

6. Boîtier d'accumulateur selon la revendication 5, **caractérisé en ce que** le système de dégazage (1) est monté sur le fond de boîtier du boîtier d'accumulateur.

7. Accumulateur comprenant un boîtier d'accumulateur selon la revendication 5 ou 6.

8. Accumulateur selon la revendication 7, **caractérisé par** une pluralité de piles galvaniques, qui sont disposées dans le boîtier d'accumulateur.

9. Accumulateur selon la revendication 8, **caractérisé en ce que** les piles galvaniques sont des piles ion-lithium ou des piles nickel-métal-hydrure.
